# EUROPÄISCHE PATENTSCHRIFT

(11) **EP 1 664 609 B1**
(45) Veröffentlichungstag und Bekanntmachung des Hinweises auf die Patenterteilung: **08.04.2009**
(21) Anmeldenummer: 04786706.4
(22) Anmeldetag: 02.09.2004
(51) Int. Cl.: F16L 13/02, F16L 11/15, F16L 33/26

(54) **METALLSCHLAUCH UND VERFAHREN ZUR HERSTELLUNG EINES METALLSCHLAUCHS**
FLEXIBLE METAL TUBE AND METHOD FOR THE PRODUCTION OF A METAL TUBE
TUYAU FLEXIBLE METALLIQUE ET PROCEDE DE PRODUCTION D'UN TUYAU FLEXIBLE METALLIQUE

(30) Priorität: 09.09.2003 DE 10341853
(43) Veröffentlichungstag der Anmeldung: 07.06.2006
(73) Patentinhaber: FRIEDRICH PRÖWIG INH. GERDA WIELE GMBH & CO. KG, 38120 Braunschweig (DE)
(72) Erfinder: LINDEMANN, Werner, 38120 Braunschweig (DE); BEUTLER, Timm, 38106 Braunschweig (DE)
(74) Vertreter: Lins, Edgar
(86) Internationale Anmeldenummer: PCT/DE2004/001965
(87) Internationale Veröffentlichungsnummer: WO 2005/026600

(56) Entgegenhaltungen:
- EP-A- 0 556 019
- EP-A- 0 790 455
- EP-A- 0 805 298
- DE-C- 19 930 852
- US-A- 5 297 586

## Beschreibung

Die Erfindung betrifft einen Metallschlauch mit einem parallel gewellten metallischen Wellrohr und einem darüber angeordneten, Zugkräfte aufnehmenden Metallgeflecht sowie mit wenigstens einem Anschlussstück an wenigstens einem der Schlauchenden, das mit einem Hülsenstück das Schlauchende übergreift und mit diesem sowie mit dem Metallgeflecht durch eine geschlossene radiale Schweißnaht verbunden ist.

Die Erfindung betrifft ferner ein Verfahren zur Herstellung eines Metallschlauchs, der mit einem parallel gewellten metallischen Wellrohr und einem darüber angeordneten, Zugkräfte aufnehmenden Metallgeflecht aufgebaut ist, und der an wenigstens einem Schlauchende mit einem Anschlussstück dadurch versehen wird, dass ein Hülsenstück des Anschlussstücks über das Schlauchende geschoben wird und dass radial eine Schweißnaht erzeugt wird, um Hülsenstück, Metallgeflecht und Wellenrohr miteinander zu verbinden.

Metallschläuche dieser Art sind bekannt und werden vielfältig dort verwendet, wo der Einsatz von z. B. Kunststoffschläuchen nicht möglich oder nicht vorteilhaft ist.

Der über seine Länge zweiteilige Aufbau des Metallschlauchs aus einem Wellrohr und einem Metallgeflecht ist durch eine Funktionsaufteilung bedingt. Das Wellrohr besteht aus sich über die axiale Länge aneinander anschließenden Wellenbergen und Wellentälern bezüglich der jeweils radialen Richtung. Die Wellenberge liegen somit an dem Metallgeflecht an, während die Wellentäler den freien Innendurchmesser des Wellrohres bestimmen. Durch eine Spreizung bzw. Stauchung der Wellen ermöglicht das Wellrohr eine Biegung des Metallschlauchs. Das Wellrohr sorgt für die Dichtigkeit des Metallschlauchs und seine Flexibilität, während Kräfte von dem das Wellrohr umgebenden Metallgeflecht aufgenommen werden. Das Metallgeflecht begrenzt die Biegbarkeit des Metallschlauches, nimmt Kräfte, insbesondere Zugkräfte, auf und sorgt für einen mechanischen Schutz des Wellrohres. Am Schlauchende wird der Metallschlauch mit einem Anschlussstück versehen, das beispielsweise als glatter Stutzen, als Stecknippel oder in Form eines Gewinde ausgebildet sein kann. Die Verbindung zwischen Wellrohr, Metallgeflecht und Anschlussstück muss einerseits mechanisch stabil sein und andererseits die Dichtigkeit des Metallschlauchs gewährleisten. In bekannter Technik wird der Metallschlauchs am Schlauchende abgelängt und zwar vornehmlich in Höhe eines Wellentals des Wellrohres. Anschließend wird eine beidseitig offene Hülse auf das Schlauchende soweit aufgeschoben, dass das Hülsenstück mit dem abgeschnittenen Ende etwa fluchtet. In dieser Position wird eine stirnseitige Schweißnaht aufgebracht mit der das zum Wellental ragende Stück des Wellrohrs mit der stirnseitigen Fläche der Hülse und dem stirnseitigen Ende des Metallgeflechts verbunden wird. Auf das so vorbereitete Ende wird ein geeignetes Anschlussteil aufgesetzt und regelmäßig mit einer weiteren Schweißnaht mit dem stirnseitigen Bereich des Schlauchs, insbesondere mit der ersten Schweißnaht, verbunden, sofern nicht das Anschlussteil in geeigneter Weise vorbereitet worden ist. Dieses Verfahren ist sehr aufwändig, erfordert zwei präzise Schweißnähte, die zueinander passen müssen und ist nicht automatisierbar. Aufgrund der komplizierten Herstellungsweise besteht auch eine reduzierte Fertigungssicherheit, die die Anwendung der hergestellten Metallschläuche für höchste Drücke begrenzt oder von aufwändigen Prüfverfahren abhängig macht.

Durch DE 695 22 086 T2 (EP 0 719 970 B1) sind ein Metallschlauch und ein Verfahren zur Herstellung eines Metallschlauchs der eingangs erwähnten Art bekannt. Die Verbindung des Anschlussstücks mit dem Wellrohr und dem Metallgeflecht erfolgt durch eine einzige radial umlaufende Schweißnaht, die von einer Wandverdünnung des Hülsenstücks des Anschlussstücks in solch einer Position erzeugt wird, dass die Schweißnaht in Übereinstimmung mit der üblichen Technik das Hülsenstück mit dem stirnseitigen Ende des Wellrohres und mit dem stirnseitigen Ende des Metallgeflechts verbindet. Eine derartige, am unmittelbaren Ende des Metallschlauches vorgesehene Schweißverbindung weist die vorstehend aufgeführten Nachteile auf und ist insbesondere für höchste Drücke nicht ohne weiteres geeignet.

Aus EP 0 790 455 A ist ein Metallschlauch und ein entsprechendes Verfahren zu dessen Herstellung nach den Oberbegriffen der Ansprüche 1 und 7 bekannt.

Der vorliegenden Erfindung liegt die Aufgabe zugrunde, einen Metallschlauch der eingangs erwähnten Art so auszubilden, dass er einfach und automatisierbar herstellbar ist und eine verbesserte Fertigungssicherheit aufweist.

Zur Lösung dieser Aufgabe ist erfindungsgemäß ein Metallschlauch der eingangs erwähnten Art dadurch gekennzeichnet, dass die geschlossene radiale Schweißnaht mit Abstand vom Ende des Wellrohres in Höhe eines Wellenbergs des Wellrohres ausgebildet ist, und sich ausgehend von dem Hülsenstück durch das Metallgewebe hindurch in den Wellenberg des Wellrohres hinein erstreckt.

Zur Lösung der genannten Aufgabe ist erfindungsgemäß ferner das Verfahren der eingangs erwähnten Art dadurch gekennzeichnet, dass die Lage wenigstens eines Wellenbergs des Wellrohres an der radialen Außenseite des Hülsenstücks bestimmt wird und dass die radiale Schweißnaht mit Abstand vom Ende des Wellrohres in Höhe des Wellenbergs ausgehend von dem Hülsenstück durch das Metallgewebe in den Wellenberg hinein erzeugt wird.

Erfindungsgemäß ist eine einzige Schweißnaht vorgesehen, die das, vorzugsweise einstückig ausgebildete, Anschlussstück mit dem Metallgeflecht und dem Wellrohr verbindet. Die hierfür ausgebildete Schweißnaht wird vorzugsweise von radial außen durch das Material des Hülsenstücks so erzeugt, dass sie sich bis zu dem Wellenberg des Wellrohres erstreckt. Das Wellrohr setzt sich somit beidseitig der Schweißnaht fort, wobei der Wellenberg in dichter Form erhalten bleibt. Da die Welle des Wellrohres auf derselben axialen Höhe umlaufend in sich geschlossen ist, kann eine geschlossene umlaufende Schweißnaht zur Verbindung mit dem Wellenberg durch das Metallgeflecht hindurch ausgebildet werden, um die geforderte dichte Verbindung zwischen Schlauch und Anschlussstück zu erzeugen. Die Schweißnaht verbindet somit alle Teile des Metallschlauches in einer dichten und mechanisch stabilen Weise. Es ist auch möglich, die Schweißnaht, beispielsweise über eine in den Schlauch eingeführte Laseroptik, von radial innen nach außen auszubilden. Versuche haben ergeben, dass die Verbindung über die umlaufende Schweißnaht stabiler ist als die Druckstabilität des Metallschlauchs, sodass in Berstversuchen das Bersten des Metallschlauches im Anschluss an das Anschlussstück auftritt, nicht jedoch ein Lösen oder eine Undichtigkeit der hergestellten Schweißnaht. Eine derartige Stabilität der Verbindung zum Anschlussstück war mit den bisherigen, umständlichen Techniken nicht sicher erreichbar.

Das erfindungsgemäße Verbindungsverfahren lässt sich in einfacher Weise automatisieren, wobei zur Sicherstellung, dass die Schweißnaht in der benötigten Weise auf einen Wellenberg des Wellrohres trifft, verschiedene Verfahren möglich sind. Beispielsweise kann das Wellrohr mit radial verschiebbaren Backen eines Lagers, insbesondere Drehlagers, von radial innen in dem Wellenberg gehalten werden, mit dem die Schweißnaht hergestellt werden soll. Durch eine feste Zuordnung der Schweißquelle, beispielsweise eines Lasers, wird die Schweißnaht sicher an der richtigen Stelle erzeugt. Alternativ kann die Position des Wellenbergs detektiert oder durch eine genaue relative Positionierung von Schlauchende und Anschlussstück an der Außenseite des Hülsenstücks bestimmt werden, wenn eine Schweißnaht von außen nach innen hergestellt wird.

Es ist denkbar, die radiale Schweißnaht, die das Hülsenstück, das Metallgeflecht und das Wellrohr miteinander verbindet, im Bereich des stirnseitigen Endes des Hülsenstücks auszubilden. Bevorzugt ist jedoch, das die Schweißnaht beidseitig vom Material des Hülsenstücks begrenzt wird, weil dadurch eine zusätzliche mechanische Stabilisierung der Schweißnaht gegeben ist.

Um einerseits ein ausreichend stabiles, d.h. mit einer ausreichenden Wandstärke ausgebildetes Anschlussstück verwenden zu können und andererseits die für die Erzeugung der Schweißnaht aufzubringende Energie möglichst gering zu halten, kann es sinnvoll sein, das Hülsenstück mit einer umlaufenden. Nut zu versehen und die Schweißnaht innerhalb der umlaufenden Nut, also im Nutgrund, auszubilden.

In einer bevorzugten Ausführungsform besteht das Wellrohr, das Metallgeflecht und das Hülsenstück aus Edelstahl. Es ist jedoch ohne Weiteres ersichtlich, dass die Ausbildung des erfindungsgemäßen Metallschlauchs auch mit allen anderen schweißbaren metallischen Materialien, also beispielsweise mit Normalstahl, erfolgen kann.

Das Metallgeflecht ist üblicherweise ein Metalldrahtgeflecht, wobei die Anzahl der Drähte pro Flechtlage und der verwendete Drahtdurchmesser den jeweiligen Anwendungsfällen angepasst wird.

Die Ausbildung der Schweißnaht erfolgt vorzugsweise mit einem Laserschweißgerät oder mit einem Elektronenstrahl-Schweißgerät. Die Verwendung anderer Schweißverfahren ist jedoch für die vorliegende Erfindung nicht ausgeschlossen, solange eine dosierte und gleichmäßige Schweißleistung für eine umlaufende Schweißnaht realisierbar ist.

Für eine verbesserte Handhabung ist es zweckmäßig, das Hülsenstück vor der Herstellung der Schweißnaht gegen das Schlauchende durch Pressen, Rollen o. dgl. zu drücken, um das Anschlussstück auf dem Schlauchende zu fixieren und/oder das Verschweißen mit dem über das Metallgeflecht anliegenden Wellenberg des Wellrohres zu erleichtern.

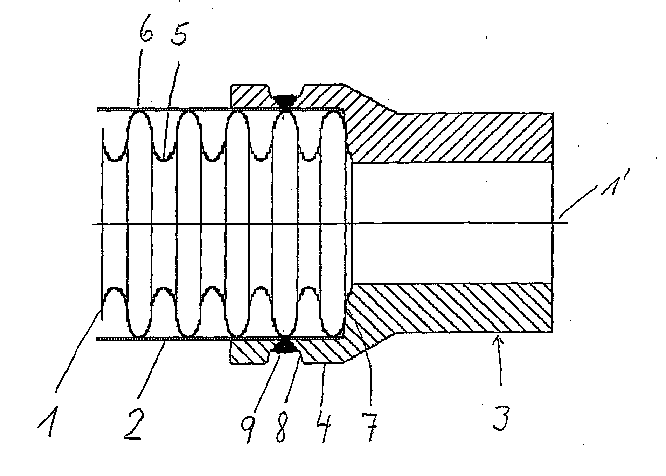

Die Erfindung soll im Folgenden anhand eines in der Zeichnung dargestellten Ausführungsbeispiels näher erläutert werden.

Die einzige Figur lässt ein Schlauchende eines Metallschlauchs erkennen, der mit einem radial inneren Wellrohr 1, einem das Wellrohr umgebenden Metallgeflecht 2 aus metallischem Draht und einem Anschlussstück 3 gebildet ist. Das Anschlussstück 3 ist schlauchseitig mit einem Hülsenstück 4 versehen, das radial außen über das abgeschnittene Ende des Wellrohres 1 und des Metallgeflechts 2 geschoben ist. Das Wellrohr 1 besteht aus in Längsrichtung aneinander anschließenden Wellentälern 5 und Wellenbergen 6, wobei die Wellenberge 6 den größeren Radius bezüglich einer Längsachse 1 des Metallschlauchs aufweisen und daher an dem Metallgewebe 2 anliegen.

Eine am Anschlussstück 3 beim Übergang zum Hülsenstück 4 ausgebildet, vom Hülsenstück 4 aus gesehen nach radial innen vorspringende Schulter 7 wird bis zum Anschlag an das abgeschnittene Ende des Wellrohres 1 geschoben. Das Wellrohr 1 ist so am Ende abgeschnitten, dass gerade der Beginn eines Wellentals 5 abgetrennt worden ist. Demgemäß liegt eine genaue Positionierung des Anschlussstücks 3 relativ zum Wellrohr 1 vor. Das Hülsenstück 4 weist auf seiner zylindrischen Außenwand eine auf gleicher axialer Höhe umlaufende Nut 8 auf, die aufgrund der genauen Positionierung des Anschlussstücks 3 relativ zum Wellrohr 1 mit einem Wellenberg 6 fluchtet. In den Nutgrund ist eine Schweißnaht 9 eingebracht, die sich, ausgehend von dem Nutgrund der Nut 8 durch das Metallgewebe 2 in den dort positionierten Wellenberg 6 des Wellrohres 1 hinein erstreckt und für eine umlaufende dichte und mechanisch stabile Verbindung von Wellrohr 1, Metallgewebe 2 und Anschlussstück 3 sorgt. Die Zeichnung lässt erkennen, dass der Wellenberge 6 des Wellrohres 1 auch in Höhe der Schweißnaht 9 in dichter Form erhalten bleibt und dass sich das Wellrohr 1 beidseitig der Schweißnaht 9 fortsetzt.

Die Schweißnaht 9 kann sich aus dem Material des Anschlussstücks 3 ergeben. Alternativ ist es möglich, den Schweißvorgang durch Zuführung eines geeigneten Schweißmaterials zu unterstützen, sodass die Schweißnaht 9 im Wesentlichen aus zugeführtem Schweißmaterial gebildet ist.

Die erfindungsgemäße Verbindung weist eine hohe Sicherheit bezüglich der Dichtigkeit und der mechanischen Festigkeit auf. Hierfür ist die Schweißnaht 9 auf der Umfangsfläche umlaufend als geschlossene Schweißnaht ausgebildet. Demzufolge ist es wichtig, dass das Wellrohr 1 parallel gewellt ist, also nicht eine gewendelte Wellung aufweist, bei der durch die Wellenberge 6 keine geschlossenen umlaufenden Bahnen gebildet würden.

## Patentansprüche

1. Metallschlauch mit einem parallel gewellten metallischen Wellrohr (1) und einem darüber angeordneten, Zugkräfte aufnehmenden Metallgeflecht (2) sowie mit wenigstens einem Anschlussstück (3) an wenigstens einem der Schlauchenden, das mit einem Hülsenstück (4) das Schlauchende übergreift und mit diesem sowie mit dem Metallgeflecht (2) durch eine geschlossene radiale Schweißnaht (9) verbunden ist, **dadurch gekennzeichnet, dass** die geschlossene radiale Schweißnaht (9) mit Abstand vom Ende des Wellrohres (1) in Höhe eines Wellenbergs (6) des Wellrohres (1) ausgebildet ist, und sich ausgehend von dem Hülsenstück (4) durch das Metallgewebe (2) hindurch in den Wellenberg (6) des Wellrohres (1) hinein erstreckt.

2. Metallschlauch nach Anspruch 1, **dadurch gekennzeichnet, dass** die Schweißnaht (9) beidseitig von Material des Hülsenstücks (4) begrenzt ist.

3. Metallschlauch nach Anspruch 2, **dadurch gekennzeichnet, dass** die Schweißnaht (9) innerhalb einer umlaufenden Nut (8) des Hülsenstücks (4) ausgebildet ist.

4. Metallschlauch nach einem der Ansprüche 1 bis 3, **dadurch gekennzeichnet, dass** das Wellrohr (1), das Metallgeflecht (2) und das Hülsenstück (4) aus Edelstahl bestehen.

5. Metallschlauch nach einem der Ansprüche 1 bis 4, **dadurch gekennzeichnet, dass** die Schweißnaht (9) eine Laserschweißnaht ist.

6. Metallschlauch nach einem der Ansprüche 1 bis 4, **dadurch gekennzeichnet, dass** die Schweißnaht (9) eine Elektronenstrahl-Schweißnaht ist.

7. Verfahren zur Herstellung eines Metallschlauchs, der mit einem parallel gewellten metallischen Wellrohr (1) und einem darüber angeordneten, Zugkräfte aufnehmenden Metallgeflecht (2) aufgebaut ist, und der an wenigstens einem Schlauchende mit einem Anschlussstück (3) dadurch versehen wird, dass ein Hülsenstück (4) des Anschlussstücks (3) über das Schlauchende geschoben wird und dass radial eine Schweißnaht (9) erzeugt wird, um Hülsenstücks (4), Metallgeflecht (2) und Wellenrohr (1) miteinander zu verbinden, **dadurch gekennzeichnet, dass** die Lage wenigstens eines mit Abstand vom Ende des Wellrohres (1) befindlichen Wellenbergs (6) des Wellrohres (1) an der radialen Außenseite des Hülsenstücks (4) bestimmt wird und dass die radiale Schweißnaht (9) in Höhe des Wellenbergs (6) ausgehend von dem Hülsenstück (4) durch das Metallgewebe (2) in den Wellenberg (6) hinein erzeugt wird.

8. Verfahren nach Anspruch 7, **dadurch gekennzeichnet, dass** die Schweißnaht (9) so eingebracht wird, dass sie beidseitig von Material des Hülsenstücks (4) begrenzt wird.

9. Verfahren nach Anspruch 8, **dadurch gekennzeichnet, dass** ein mit einer umlaufenden geschlossenen Nut versehenes Hülsenstück (4) verwendet und die Schweißnaht (9) in dem Nutgrund erzeugt wird.

10. Verfahren nach einem der Ansprüche 7 bis 9, **dadurch gekennzeichnet, dass** für die Erzeugung der Schweißnaht (9) ein Laserstrahl verwendet wird.

11. Verfahren nach einem der Ansprüche 7 bis 9, **dadurch gekennzeichnet, dass** für die Erzeugung der Schweißnaht (9) ein Elektronenstrahl verwendet wird.

12. Verfahren nach einem der Ansprüche 7 bis 11, **dadurch gekennzeichnet, dass** das auf das Schlauchende geschobene Hülsenstück (4) vor der Herstellung der Schweißnaht gegen das Schlauchende gedrückt wird.

## Claims

1. Flexible metal hose comprising a metallic corrugated tube (1), which has parallel corrugations, and a metal mesh (2), which is arranged above said corrugated tube and absorbs tensile forces, and also comprising at least one connection piece (3) on at least one of the ends of the flexible hose, said connection piece engaging over the end of the flexible hose with a sleeve piece (4) and being connected thereto and also to the metal mesh (2) by means of a closed radial weld seam (9), **characterized in that** the closed radial weld seam (9) is formed at a distance from the end of the corrugated tube (1) at the level of a corrugation peak (6) of the corrugated tube (1) and extends from the sleeve piece (4) through the metal mesh (2) into the corrugation peak (6) of the corrugated tube (1).

2. Flexible metal hose according to Claim 1,
**characterized in that** the weld seam (9) is delimited on both sides by material of the sleeve piece (4).

3. Flexible metal hose according to Claim 2,
**characterized in that** the weld seam (9) is formed within a peripheral groove (8) of the sleeve piece (4).

4. Flexible metal hose according to one of Claims 1 to 3, **characterized in that** the corrugated tube (1), the metal mesh (2) and the sleeve piece (4) consist of stainless steel.

5. Flexible metal hose according to one of Claims 1 to 4, **characterized in that** the weld seam (9) is a laser weld seam.

6. Flexible metal hose according to one of Claims 1 to 4, **characterized in that** the weld seam (9) is an electron beam weld seam.

7. Method for producing a flexible metal hose which is formed with a metallic corrugated tube (1), which has parallel corrugations, and a metal mesh (2) arranged above said corrugated tube and absorbing tensile forces, and which is provided on at least one end of the flexible hose with a connection piece (3) by a sleeve piece (4) of the connection piece (3) being pushed over the end of the flexible hose and a weld seam (9) being produced radially in order to connect the sleeve piece (4), metal mesh (2) and corrugated tube (1) to one another, **characterized in that** the position of at least one corrugation peak (6) of the corrugated tube (1), which is located at a distance from the end of the corrugated tube (1), on the radial outer side of the sleeve piece (4) is determined, and **in that** the radial weld seam (9) is produced at the level of the corrugation peak (6), extending from the sleeve piece (4) through the metal mesh (2) into the corrugation peak (6).

8. Method according to Claim 7, **characterized in that** the weld seam (9) is introduced in such a way that it is delimited on both sides by material of the sleeve piece (4).

9. Method according to Claim 8, **characterized in that** a sleeve piece (4) provided with a peripheral, closed groove is used, and the weld seam (9) is produced in the base of the groove.

10. Method according to one of Claims 7 to 9,
**characterized in that** the weld seam (9) is produced by using a laser beam.

11. Method according to one of Claims 7 to 9,
**characterized in that** the weld seam (9) is produced by using an electron beam.

12. Method according to one of Claims 7 to 11,
**characterized in that** the sleeve piece (4) which has been pushed onto the end of the flexible hose is pressed against the end of the flexible hose before the weld seam is produced.

## Revendications

1. - Tuyau flexible métallique comprenant un tube ondulé (1) métallique à ondulations parallèles et une tresse métallique (2) agencée par-dessus absorbant les forces de traction, ainsi qu'au moins une pièce de raccord (3) à au moins une des extrémités du tuyau flexible, pièce de raccord qui vient en prise sur l'extrémité du tuyau flexible avec un manchon (4) et qui est reliée à celle-ci ainsi qu'à la tresse métallique (2) via un cordon de soudure (9) radial fermé, **caractérisé en ce que** le cordon de soudure (9) radial fermé est formé à distance de l'extrémité du tube ondulé (1) à hauteur d'un sommet d'ondulation (6) du tube ondulé (1), et à partir du manchon (4) le cordon de soudure s'étend à travers le tissu métallique (2), jusque dans le sommet d'ondulation (6) du tube ondulé (1).

2. - Tuyau flexible métallique selon la revendication 1, **caractérisé en ce que** le cordon de soudure (9) est délimité de chaque côté par le matériau du manchon (4).

3. - Tuyau flexible métallique selon la revendication 2, **caractérisé en ce que** le cordon de soudure (9) est formé à l'intérieur d'une rainure périphérique (8) du manchon (4).

4. - Tuyau flexible métallique selon l'une des revendications 1 à 3, **caractérisé en ce que** le tube ondulé (1), la tresse métallique (2) et le manchon (4) sont composés d'acier inoxydable.

5. - Tuyau flexible métallique selon l'une des revendications 1 à 4, **caractérisé en ce que** le cordon de soudure (9) est un cordon de soudure laser.

6. -Tuyau flexible métallique selon l'une des revendications 1 à 4, **caractérisé en ce que** le cordon de soudure (9) est un cordon de soudure par faisceau électronique.

7. - Procédé de production d'un tuyau flexible métallique qui est constitué avec un tube ondulé (1) métallique à ondulations parallèles et une tresse métallique (2) agencée par-dessus, absorbant les forces de traction, et on munit au moins une extrémité du tuyau flexible d'une pièce de raccord (3) en engageant un manchon (4) de la pièce de raccord (3) sur l'extrémité du tuyau flexible et en fabriquant radialement un cordon de soudure (9) pour relier ensemble le manchon (4), la tresse métallique (2) et le tube ondulé (1), **caractérisé en ce que** l'on détermine sur la face radialement extérieure du manchon (4) la position au moins d'un sommet d'ondulation (6) du tube ondulé (1), se trouvant à distance de l'extrémité du tube ondulé (1), et **en ce qu'**on fabrique le cordon de soudure (9) radial à hauteur du sommet d'ondulation (6) en partant du manchon (4) en passant à travers le tissu métallique (2), et jusque dans le sommet d'ondulation (6).

8. - Procédé selon la revendication 7, **caractérisé en ce que** l'on rapporte le cordon de soudure (9) de telle façon qu'il soit délimité des deux côtés par le matériau du manchon (4).

9. - Procédé selon la revendication 8, **caractérisé en ce que** l'on utilise un manchon (4) muni d'une rainure fermée périphérique et l'on fabrique le cordon de soudure (9) dans la base de la rainure.

10. - Procédé selon l'une des revendications 7 à 9, **caractérisé en ce que** l'on utilise un faisceau laser pour la fabrication du cordon de soudure (9).

11. - Procédé selon l'une des revendications 7 à 9, **caractérisé en ce que** l'on utilise un faisceau électronique pour la fabrication du cordon de soudure (9).

12. - Procédé selon l'une des revendications 7 à 11, **caractérisé en ce qu'**avant la production du cordon de soudure, on presse contre l'extrémité du tuyau flexible le manchon (4) engagé sur l'extrémité du tuyau flexible.
